# EUROPÄISCHE PATENTANMELDUNG

(11) **EP 1 112 836 A1**
(43) Veröffentlichungstag der Anmeldung: **04.07.2001**
(21) Anmeldenummer: 99126189.2
(22) Anmeldetag: 30.12.1999
(51) Int. Cl.: B29C 59/14, B29C 47/00

(54) **Verfahren und Vorrichtung zur Herstellung von benetzbarer Kunststoffolie**

(71) Anmelder: Agrodyn Hochspannungstechnik GmbH, 33803 Steinhagen (DE)
(72) Erfinder: Buske, Christian, 33803 Steinhagen (DE); Förnsel, Peter, 32139 Spenge (DE)
(74) Vertreter: TER MEER STEINMEISTER & PARTNER GbR

(57) **Zusammenfassung**

Verfahren zur Herstellung von benetzbarer Kunststoffolie (58, 60; 64), bei dem das Kunststoffmaterial aus einer Düse (42; 66) extrudiert und verstreckt wird und die Oberfläche des Kunststoffmaterials einer Vorbehandlung unterzogen wird, dadurch gekennzeichnet, daß die Vorbehandlung mittels eines Strahls (36) eines atmosphärischen Plasmas in einem Arbeitsgang mit der Extrusion durchgeführt wird.

## Beschreibung

Die Erfindung betrifft ein Verfahren und Vorrichtungen zur Herstellung von benetzbarer Kunststoffolie, bei denen das Kunststoffmaterial aus einer Düse extrudiert und verstreckt wird und die Oberfläche des Kunststoffmaterials einer Vorbehandlung unterzogen wird.

Die wichtigsten Verfahren zur Herstellung von Kunststoffolien sind das Blasverfahren und das Breitschlitzverfahren. Beim Blasverfahren wird das Kunststoffmaterial in der Form eines Schlauches aus einer Ringdüse extrudiert und dann vor dem Erstarren verstreckt, indem der Schlauch durch Zufuhr von Innenluft, die zugleich zur Kühlung dient, zu einer Blase aufgeblasen wird. Die Folienblase wird dann, nachdem das Material an der sogenannten Frostgrenze erstarrt ist, flachgelegt und zu einem Coil aufgewickelt. Beim Breitschlitzverfahren wird dagegen eine einlagige Folienbahn aus einer Breitschlitzdüse extrudiert und mit Hilfe von Streckwalzen verstreckt.

Wenn die Folie bei der späteren Weiterverarbeitung beispielsweise bedruckt oder mit einer Klebeschicht versehen werden soll, ist es wichtig, daß die Oberfläche der Folie mit der aufgetragenen Flüssigkeit (z.B. Druckfarbe oder Kleber) benetzbar ist. Die Benetzbarkeit der Folie wird gemessen, indem eine Testtinte mit definierter Oberflächenspannung auf die Folie aufgetragen wird. Die Oberflächenspannung der Testtinte, mit der Folie gerade noch benetzbar ist, ohne daß sie an der Oberfläche perlt, ist ein Maß für die Benetzbarkeit der Folie. Zur Erhöhung der Benetzbarkeit ist es bisher üblich, die Folie in einem gesonderten Arbeitsgang einer Vorbehandlung zu unterziehen.

Aus EP-A-0 761 415 ist ein Verfahren zum Vorbehandeln von Kunststoffoberflächen bekannt, bei dem mit Hilfe einer Plasmadüse ein Strahl eines relativ kühlen atmosphärischen Plasmas erzeugt wird. Durch die in dem Plasma enthaltenen reaktiven Ionen und Radikale wird die Oberflächenstruktur der Folie so verändert, daß sich die Benetzbarkeit erhöht. Der Plasmastrahl hat annähernd die Form einer Kerzenflamme. Das bekannte Plasma-Vorbehandlungsverfahren eignet sich deshalb besonders zum Vorbehandeln von Kunststoffprofilen oder Kunststoffteilen mit einem unebenen Oberflächenrelief, da der Plasmastrahl gut in die Vertiefungen des Reliefs eindringen kann. Zum Vorbehandeln von größeren ebenen Oberflächen wird in der genannten Veröffentlichung eine Batterie aus mehreren Plasmadüsen vorgeschlagen. Bei sehr breiten Werkstücken ergibt sich so jedoch ein relativ hoher apparativer Aufwand.

Zum Vorbehandeln von Kunststoffolien ist deshalb bisher ein Corona-Vorbehandlungsverfahren gebräuchlich, bei dem die Folienbahn zwischen stab- oder walzenförmigen Elektroden hindurchgeführt wird, die sich über die gesamte Breite der Folienbahn erstrecken und an die eine hochfrequente Wechselspannung mit hoher Amplitude angelegt wird, so daß es zwischen den Elektroden zu einer Coronaentladung kommt, deren Ladungsbüschel die Folie vorbehandelt.

Bei vielen Anwendungen darf die Vorbehandlung der Folie nur einseitig erfolgen. Dies ist beispielsweise dann der Fall, wenn in einer Verpackungsmaschine zwei übereinanderliegende Folienbahnen vorübergehend einem erhöhten Druck oder einer erhöhten Temperatur ausgesetzt werden. Wenn dann die beiden einander zugewandten Oberflächen der Folienlagen vorbehandelt wurden, sei es auch nur punktuell, so können die Folienlagen an den vorbehandelten Stellen miteinander verschweißen, so daß die Folie einreißt, wenn die Folienlagen später wieder voneinander getrennt werden. Bei dem Corona-Vorbehandlungsverfahren ist eine besondere Gestaltung der Elektroden und eine besondere Verfahrensführung erforderlich, um eine punktuelle Rückseitenvorbehandlung der Folienbahn auch nur einigermaßen zuverlässig auszuschließen.

Generell ist die Verarbeitungsgeschwindigkeit, mit der die Vorbehandlung nach dem herkömmlichen Coronaverfahren ausgeführt werden kann, nicht mit der Extrusionsgeschwindigkeit bei der Herstellung der Folie kompatibel. Außerdem ist es schwierig, eine einheitliche Intensität der Vorbehandlung über die gesamte Breite der Folienbahn sicherzustellen. Wenn die Vorbehandlung lokal zu intensiv ausfällt, kann es zu einem Zusammenbacken (Verblocken) der Folienlagen kommen, wenn die Folie zu einem Coil aufgewickelt wird. Aus diesen Gründen ist es bisher üblich, die Vorbehandlung erst unmittelbar vor der Weiterverarbeitung der Folie durchzuführen. Dies setzt jedoch voraus, daß eine Vorbehandlungsanlage in jedem Weiterverarbeitungsbetrieb vorhanden ist.

Aufgabe der Erfindung ist es deshalb, die Herstellung von benetzbarer Kunststoffolie zu rationalisieren.

Diese Aufgabe wird erfindungsgemäß dadurch gelöst, daß die Vorbehandlung mittels eines Strahls eines atmosphärischen Plasmas in einem Arbeitsgang mit der Extrusion durchgeführt wird.

Die Erfindung beruht auf der Erkenntnis, daß das Plasma-Vorbehandlungsverfahren, das bisher nur für Einzelwerkstücke oder Endlosmaterialien mit geringer Breite eingesetzt wurde, einen wesentlich größeren Spielraum für die Einstellung der Intensität der Vorbehandlung sowie eine genauere Steuerung der Intensität dieser Vorbehandlung ermöglicht, so daß es möglich ist, die Arbeitsgeschwindigkeit bei der Vorbehandlung an die Extrusionsgeschwindigkeit bei der Herstellung der Folie anzupassen und somit beide Vorgänge in einen einzigen Arbeitsgang zu integrieren. Selbst wenn ein größerer apparativer Aufwand bei der Herstellung der benetzbaren Folie erforderlich ist, sind die Installationskosten insgesamt geringer als in dem Fall, daß in jedem Verarbeitungsbetrieb eine Anlage zur Vorbehandlung der Folie vorgehalten werden muß.

Ein weiterer wesentlicher Vorteil des erfindungsgemäßen Verfahrens besteht darin, daß bei einseitiger Plasmabehandlung eine unerwünschte Vorbehandlung der Rückseite der Folie zuverlässig ausgeschlossen werden kann. Schließlich läßt sich die Intensität der Vorbehandlung mit diesem Verfahren auch so steuern, daß zwar eine ausreichende Benetzbarkeit der Folie für die praktischen Anwendungen erreicht wird, andererseits jedoch ein Verblocken der Folienlagen verhindert wird, falls die Folie vor der Weiterverarbeitung zu einem Coil aufgewickelt werden soll.

Bei im Breitschlitzverfahren hergestellter Flachfolie ist sichergestellt, daß im Coil die vorbehandelte Oberfläche nur mit einer unvorbehandelten Oberfläche der nächsten Folienlage in Berührung kommt. Dasselbe gilt auch für Blasfolien, sofern der flachgelegte Folienschlauch vor dem Aufwickeln zum Coil in zwei einlagige Folienbahnen aufgetrennt wird.

Geeignete Vorrichtungen zur Durchführung des Verfahrens sind Gegenstand der unabhängigen Vorrichtungsansprüche.

Vorteilhafte Ausgestaltungen der Erfindung ergeben sich aus den Unteransprüchen.

Die Erfindung bietet die vorteilhafte Möglichkeit, die Vorbehandlung zu einem Zeitpunkt durchzuführen, bei dem die mit Folie infolge der unmittelbar vorausgegangenen Extrusion noch eine erhöhte Temperatur aufweist. Die Vorbehandlung findet somit bei höherer Temperatur statt und ist entsprechend intensiver. Falls eine höhere Intensität der Vorbehandlung nicht erwünscht ist, kann die Einwirkungsdauer des Plasmastrahls entsprechend verkürzt werden, so daß eine höhere Verarbeitungsgeschwindigkeit erreichbar ist.

Da die Folie bei dem erfindungsgemäßen Verfahren nur mit dem Plasmastrahl und nicht mit Festkörpern wie Elektroden oder dergleichen in Berührung kommt, besteht außerdem die Möglichkeit, die Vorbehandlung schon vor dem vollständigen Verstrecken der Folie durchzuführen. Dies hat den Vorteil, daß die Größe der vorzubehandelnden Fläche und damit der Installationsaufwand abnimmt. Beim Verstrecken der Folie kommt es im wesentlichen zu einer Strekkung der Molekülketten des Kunststoffmaterials, ohne daß eine nennenswerte Umschichtung des Materials innerhalb der Folie stattfindet. Die Moleküle, die sich bei der Plasmavorbehandlung an der Oberfläche befunden haben, liegen deshalb größtenteils auch noch nach dem Verstrecken an der Oberfläche, so daß die Benetzbarkeit beim Verstrecken nicht übermäßig abnimmt. In einer besonders vorteilhaften Ausführungsform findet die Vorbehandlung schon an der noch zähflüssigen Schmelze statt.

Für die Vorbehandlung kann eine Batterie von Plasmadüsen eingesetzt werden, wie in EP-A-0 761 415 vorgeschlagen wird. Besonders vorteilhaft ist jedoch eine Plasmadüse, die einen flachen, aufgefächerten Plasmastrahl erzeugt und die beispielsweise den in Anspruch 10 angegebenen Aufbau hat. Eine solche Plasmadüse ist auch unabhängig von den erfindungsgemäßen Verfahren und Vorrichtungen mit Vorteil einsetzbar.

Das Verfahren bietet weiterhin die vorteilhafte Möglichkeit, Substanzen, mit denen die Folie beschichtet werden soll oder die in die obere Folienschicht implantiert werden sollen, mit dem Arbeitsgas oder über eine besondere Zufuhreinrichtung direkt in das Plasma zuzuführen, so daß die Beschichtung in einem Arbeitsgang mit der Vorbehandlung erfolgen kann.

Im folgenden werden Ausführungsbeispiele der Erfindung anhand der Zeichnung näher erläutert.

### Es zeigen:

- Fig. 1: einen axialen Schnitt durch eine zur Durchführung des erfindungsgemäßen Verfahrens geeignete Plasmadüse;
- Fig. 2: einen Schnitt durch den Mündungsbereich der Plasmadüse in der zur Schnittebene nach Figur 1 senkrechten Schnittebene;
- Fig. 3: eine Prinzipskizze einer Blasfolienanlage zur Durchführung des Verfahrens gemäß einer Ausführungsform der Erfindung; und
- Fig. 4: eine Prinzipskizze einer Anlage zur Durchführung des Verfahrens gemäß einer anderen Ausführungsform.

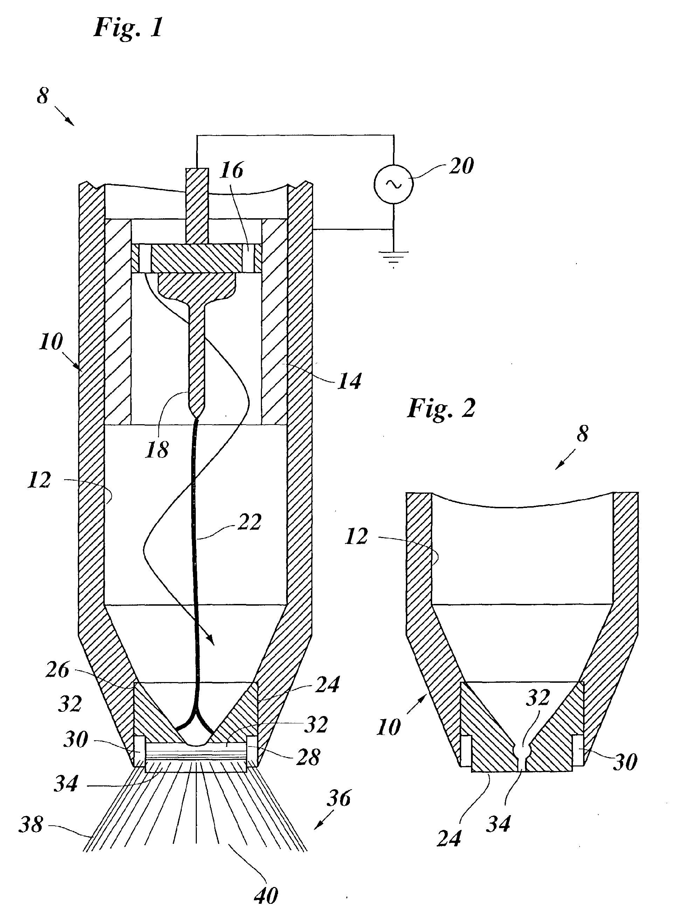

Zunächst wird unter Bezugnahme auf Figuren 1 und 2 ein Beispiel einer Plasmadüse beschrieben, die zur Durchführung des erfindungsgemäßen Verfahrens geeignet ist.

Die Plasmadüse 8 weist ein rohrförmiges Gehäuse 10 auf, das einen langgestreckten, am unteren Ende konisch verjüngten Düsenkanal 12 bildet. In den Düsenkanal 12 ist ein elektrisch isolierendes Keramikrohr 14 eingesetzt. Ein Arbeitsgas, beispielsweise Luft, wird vom in der Zeichnung oberen Ende her in den Düsenkanal 12 zugeführt und mit Hilfe einer in das Keramikrohr 14 eingesetzten Dralleinrichtung 16 so verdrallt, daß es wirbelförmig durch den Düsenkanal 12 strömt, wie in der Zeichnung durch einen schraubenförmigen Pfeil symbolisiert wird. In dem Düsenkanal 12 entsteht so ein Wirbelkern, der längs der Achse des Gehäuses verläuft.

An der Dralleinrichtung 16 ist eine stiftförmige Elektrode 18 montiert, die koaxial in den Düsenkanal 12 ragt und an die mit Hilfe eines Hochspannungsgenerators 20 eine hochfrequente Wechselspannung angelegt wird. Die mit Hilfe des Hochfrequenzgenerators 20 erzeugte Spannung liegt in der Größenordnung von einigen Kilovolt und hat beispielsweise eine Frequenz in der Größenordnung von 20 kHz.

Das aus Metall bestehende Gehäuse 10 ist geerdet und dient als Gegenelektrode, so daß eine elektrische Entladung zwischen der Elektrode 18 und dem Gehäuse 10 hervorgerufen werden kann. Beim Einschalten der Spannung kommt es aufgrund der hohen Frequenz der Wechselspannung und aufgrund der Dielektrizität des Keramikrohres 14 zunächst zu einer Coronaentladung an der Dralleinrichtung 16 und der Elektrode 18. Durch diese Coronaentladung wird eine Bogenentladung von der Elektrode 18 zum Gehäuse 10 gezündet. Der Lichtbogen 22 dieser Entladung wird durch das verdrallt einströmende Arbeitsgas mitgenommen und im Kern der wirbelförmigen Gasströmung kanalisiert, so daß der Lichtbogen dann nahezu geradlinig von der Spitze der Elektrode 18 längs der Gehäuseachse verläuft und sich erst im Bereich der Mündung des Gehäuses 10 radial auf die Gehäusewand verzweigt.

In die Mündung des Gehäuses 10 ist ein zylindrisches Mundstück 24 aus Kupfer eingesetzt, dessen axial inneres Ende an einer Schulter 26 des Gehäuses anliegt. Das konisch verjüngte Ende des Düsenkanals 12 setzt sich in dem Mundstück 24 stetig, mit gleichem oder leicht geändertem Kegelwinkel fort. Der Lichtbogen 22 verzweigt sich innerhalb des Mundstücks 24 auf die konischen Wände des Mundstücks.

Das Mundstück 24 weist am freien, in Figur 1 unteren Ende einen Abschnitt 28 mit reduziertem Durchmesser auf, der mit der Umfangswand des Gehäuses 10 einen in Mündungsrichtung offenen Ringkanal 30 bildet. Die konisch verjüngte Spitze des Düsenkanals 12 mündet in einen Querkanal 32, der durch eine Querbohrung in dem Abschnitt 28 gebildet wird und an beiden Enden zu dem Ringkanal 30 hin offen ist. An diesen Querkanal 32, der gemäß Figur 2 einen kreisförmigen Querschnitt hat, schließt sich axial ein schmalerer, diametral durch das Mundstück verlaufender Schlitz 34 an, der zur Stirnfläche des Mundstücks offen ist.

Das drallförmig durch den Düsenkanal 12 strömende Arbeitsgas kommt im Wirbelkern in innige Berührung mit dem Lichtbogen 22, so daß ein hochreaktives Plasma mit relativ niedriger Temperatur erzeugt wird. Dieses Plasma verteilt sich im Querkanal 32 und tritt dann zum Teil durch den Schlitz 34 und zum Teil auch durch die offenen Enden des Querkanals 32 und den Ringkanal 30 aus der Plasmadüse aus. Auf diese Weise wird ein Plasmastrahl 36 in der Form eines flachen Fächers erzeugt, der in den Randbereichen 38 eine größere Dichte und eine größere Strömungsgeschwindigkeit als in der Nähe der Düsenachse aufweist. Somit ist die Reichweite des Plasmastrahls 36 an den Rändern größer als in der Mitte, so daß der stromabwärtige Rand 40 des Plasmastrahls eine konkave Krümmung aufweist und somit der Fächer insgesamt die Form eines Schwalbenschwanzes annimmt. Diese Form des Plasmastrahls stellt sicher, daß sich der Plasmastrahl gut an das zu behandelnde Material anschmiegt.

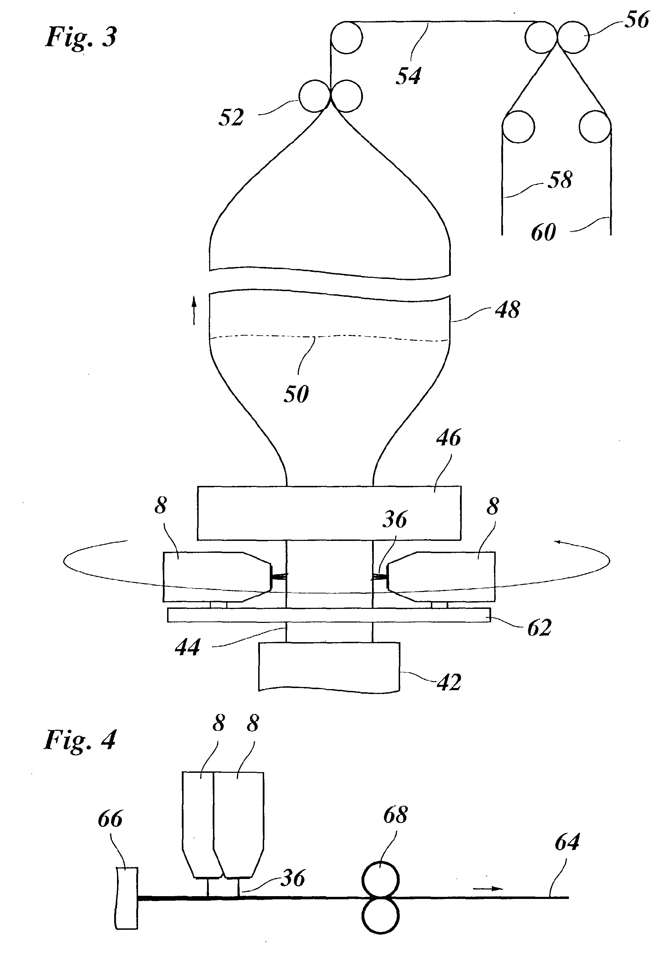

Figur 3 zeigt eine Blasfolienanlage mit einer Ringdüse 42 zur Extrusion eines Schlauches 44 aus Kuststoffmaterial. Der Schlauch 44 tritt senkrecht nach oben aus der Ringdüse 42 aus und läuft durch einen Kühlring 46, mit dem Kühlluft auf dem gesamten Umfang gleichmäßig von außen gegen den Schlauch geblasen wird, um die noch zähflüssige Kunststoffschmelze zu kühlen. Mit Hilfe eines nicht gezeigten Blassystems wird außerdem Luft von innen in den Schlauch 44 geblasen, um diesen zu einer Folienblase 48 mit größerem Durchmesser aufzublasen. Auf diese Weise wird das die Schlauchwände bildende Kunststoffmaterial zu einer dünnen Schlauchfolie verstreckt. Nachdem die Folie an der Frostgrenze 50 erstarrt ist und sich im weiteren Verlauf der Aufwärtsbewegung weiter abgekühlt hat, wird die Folienblase durch eine Flachlegeeinrichtung 52 zu einem doppellagigen Folienschlauch 54 flachgelegt. Dieser Folienschlauch 54 wird einer Schneideinrichtung 56 zugeführt und dort durch Abtrennen der beiden Längsränder in zwei einlagige Folienbahnen 58, 60 aufgeteilt, die dann weiterverarbeitet oder jeweils zu einem Coil gewickelt werden können. Die bisher beschriebenen Komponenten der Blasfolienanlage entsprechen dem Stand der Technik.

Erfindungsgemäß ist zwischen der Ringdüse 42 und dem Kühlring 46 ein Drehteller 62 angeordnet, der den Schlauch 44 umgibt und einen Kranz von Plasmadüsen 8 der in Figuren 1 und 2 gezeigten Art trägt. Die von den Plasmadüsen 8 abgegebenen Plasmastrahlen 36 sind auf den Umfang des Schlauches 44 gerichtet und bewirken eine ausschließlich einseitige Vorbehandlung an der noch nicht erstarrten Schmelze.

Der Drehteller 62 wird um die vertikale Achse der Folienblase 48 und der Ringdüse 42 gedreht, so daß die Plasmadüsen 8 auf dem Umfang des Schlauches 44 umlaufen. Diese Umlaufbewegung überlagert sich mit der Aufwärtsbewegung des Schlauches, so daß jeder Plasmastrahl 40 auf dem Umfang des Schlauches 44 eine schraubenförmig um den Schlauch umlaufende vorbehandelte Spur hinterläßt. Die Ebenen der fächerförmigen Plasmastrahlen 36 sind derart schräg angestellt, daß sie rechtwinklig zu dieser Spur verlaufen, so daß die Breite des Fächers optimal ausgenutzt wird. Diese Breite und die Anzahl der Plasmadüsen 8 sind so aufeinander abgestimmt, daß sich die einzelnen schraubenförmigen Spuren, die eine Art mehrgängiges Gewinde bilden, zu einer durchgehenden vorbehandelten Fläche ergänzen.

Durch die Rotationsbewegung der Plasmadüsen 8 ist es möglich, die Anzahl der benötigten Düsen zu verringern. Außerdem trägt diese Rotation zu einer Vergleichmäßigung des Dickenprofils der Blasfolie bei. Durch geringfügige Temperaturunterschiede der von den einzelnen Plasmadüsen 8 abgegebenen Plasmastrahlen 36 könnte es zu Temperaturunterschieden und damit auch zu einer unterschiedlichen Plastizität des Kunststoffmaterials kommen, die dann beim Verstrecken der Folie zu einem entsprechenden Muster von Dünnstellen und Dickenstellen führen würde. Durch die Rotation der Plasmadüsen 8 werden die Temperaturunterschiede teilweise ausgeglichen, und es wird zumindest sichergestellt, daß sich die Dünnstellen und Dickstellen nicht immer an denselben Umfangspositionen der Folienblase befinden.

Wahlweise kann aber auch mit stationären Plasmadüsen gearbeitet werden, die dann, ggf. in der Höhe gestaffelt, so anzuordnen sind, daß ihre fächerförmigen Plasmastrahlen 36 sich lückenlos überlappen. Es sind auch geregelte Kühlringe bekannt, mit denen sich Unterschiede im Dickenprofil der Folie ausregeln lassen. Wenn der Kühlring 46 ein solcher geregelter Kühlring ist, lassen sich auch die eventuell durch die stationären Plasmadüsen hervorgerufenen Temperaturunterschiede ausgleichen. Umgekehrt ist es denkbar, durch Ändern der Spannung und/oder des Luftdurchsatzes der einzelnen Plasmadüsen 8 die Temperatur des Plasmas zu beeinflussen und dann die Plasmadüsen 8 anstelle des Kühlrings zum Ausregeln des Dickenprofils zu verwenden.

Figur 4 zeigt, stark vereinfacht, eine Anlage zur Herstellung einer einlagigen Folienbahn 64 mit Hilfe einer Breitschlitzdüse 66. Die aus der Breitschlitzdüse 66 austretende Folienbahn wird mit Hilfe von Streckwalzen 68 verstreckt. Dabei wird die Folienbahn sowohl in Breitenrichtung (senkrecht zur Zeichenebene in Figur 4) als auch in Transportrichtung gedehnt, so daß die Translationsgeschwindigkeit des Kunststoffmaterials zwischen der Breitschlitzdüse 66 und den Streckwalzen 68 zunimmt. Die Plasmadüsen 8 sind in diesem Fall in zwei Reihen gestaffelt und auf Lücke versetzt zwischen der Breitschlitzdüse 66 und den Streckwalzen 68 angeordnet. Da die Breite der Folienbahn 64 hier noch geringer ist als an den Streckwalzen 68, wird eine entsprechend geringe Anzahl von Plasmadüsen 8 benötigt, und zugleich wird aufgrund der noch relativ geringen Translationsgeschwindigkeit des Folienmaterials an den Plasmadüsen 8 eine hohe Intensität der Vorbehandung erreicht.

Bisher erfolgt das Strecken der Breitschlitzfolie häufig in einem Streckofen, in dem die Folie zusätzlich mit Hilfe von Infrarotstrahlern beheizt wird. Bei dem erfindungsgemäßen Verfahren kann die Wärme der Plasmastrahlen dazu genutzt werden, die Zusatzheizung ganz oder teilweise zu ersetzen. Da die Temperatur der Plasmastrahlen in gewissen Grenzen unabhängig von der Intensität der Vorbehandlung variiert werden kann, läßt sich das Temperaturprofil der Folie beim Strecken gezielt einstellen.

## Patentansprüche

1. Verfahren zur Herstellung von benetzbarer Kunststoffolie (58, 60; 64), bei dem das Kunststoffmaterial aus einer Düse (42; 66) extrudiert und verstreckt wird und die Oberfläche des Kunststoffmaterials einer Vorbehandlung unterzogen wird, dadurch **gekennzeichnet**. daß die Vorbehandlung mittels eines Strahls (36) eines atmosphärischen Plasmas in einem Arbeitsgang mit der Extrusion durchgeführt wird.

2. Verfahren nach Anspruch 1, dadurch **gekennzeichnet**. daß die Vorbehandlung zu einem Zeitpunkt durchgeführt wird, an dem das frisch extrudierte Folienmaterial noch eine oberhalb der Raumtemperatur liegende Temperatur hat.

3. Verfahren nach Anspruch 2, dadurch **gekennzeichnet**. daß die Vorbehandlung vor oder während des Verstreckens des Folienmaterials durchgeführt wird.

4. Verfahren nach Anspruch 2 oder 3, dadurch **gekennzeichnet**. daß die Vorbehandlung durchgeführt wird, bevor die das Folienmaterial bildende Schmelze erstarrt ist.

5. Vorrichtung zur Durchführung des Verfahrens nach einem der vorstehenden Ansprüche, mit einer Blasfolienanlage, die eine Ringdüse (42) zur Extrusion eines Schlauches (44) aus Kunststoffmaterial aufweist, der dann zu einer Folienblase (48) aufgeblasen wird, **gekennzeichnet** durch mindestens eine am Umfang des Schlauches (44) oder der Folienblase (48) angeordnete Plasmadüse (8), deren Plasmastrahl (36) auf die Außenfläche des Folienmaterials gerichtet ist.

6. Vorrichtung nach Anspruch 5, mit einem in Abstand zu der Ringdüse (42) angeordneten Kühlring (46) zum Kühlen der Folienblase, dadurch **gekennzeichnet**. daß die Plasmadüse (8) zwischen der Ringdüse (42) und dem Kühlring (46) angeordnet ist.

7. Vorrichtung nach Anspruch 5 oder 6, dadurch **gekennzeichnet.**daß die Plasmadüse zu einer Umlaufbewegung um den Schlauch (44) oder die Folienblase (48) antreibbar ist.

8. Vorrichtung zur Durchführung des Verfahrens nach einem der Ansprüche 1 bis 4, mit einer Breitschlitzdüse (66) zur Extrusion einer Folienbahn (64) und mindestens einem Streckwalzenpaar (68) zum Verstrecken der Folienbahn, **gekennzeichnet** durch an der Folienbahn (64) angeordnete Plasmadüsen (8), deren Plasmastrahlen (36) sich auf der Breite der Folienbahn (64) lückenlos überlappen.

9. Vorrichtung nach Anspruch 8, dadurch **gekennzeichnet**. daß die Plasmadüsen (8) zwischen der Breitschlitzdüse (66) und den Streckwalzen (68) angeordnet sind.

10. Vorrichtung nach einem der Ansprüche 5 bis 9, dadurch **gekennzeichnet**. daß die Plasmadüse (8) ein rohrförmiges, elektrisch leitfähiges Gehäuse (10), das einen von einem Arbeitsgas durchströmten Düsenkanal (12) bildet, eine koaxial im Düsenkanal angeordnete Elektrode (18) und einen Hochfrequenzgenerator (20) zum Anlegen einer Spannung zwischen der Elektrode (18) und dem Gehäuse (10) aufweist und daß der Auslaß des Düsenkanals (12) als schmaler Schlitz (32) ausgebildet ist.
